# EUROPÄISCHE PATENTANMELDUNG

(11) **EP 4 481 262 A1**
(43) Veröffentlichungstag der Anmeldung: **25.12.2024**
(21) Anmeldenummer: 24182990.2
(22) Anmeldetag: 19.06.2024
(51) Int. Cl.: F17C 5/00, F17C 5/06

(54) **VORRICHTUNG UND VERFAHREN ZUR STEUERUNG EINES BETANKUNGSVORGANGS MIT WASSERSTOFF**

(30) Priorität: 22.06.2023 DE 102023116395
(71) Anmelder: Liebherr-Werk Bischofshofen GmbH, 5500 Bischofshofen (AT)
(72) Erfinder: DENGG, Reinhard, 5580 Tamsweg (AT); HUTTEGGER, Josef, 5611 Grossarl (AT); KIEGERL, Christoph, 5453 Werfenweng (AT)
(74) Vertreter: Herrmann, Uwe

(57) **Zusammenfassung**

Die vorliegende Erfindung betrifft eine Arbeitsmaschine, welche dazu ausgelegt ist, mittels einer Tankstelle mit Wasserstoff betankbar zu sein, mit einer Steuerungseinheit, welche dazu ausgelegt ist, einen Betankungsvorgang der Arbeitsmaschine mit Wasserstoff zu überwachen und im Falle einer erfassten Unregelmäßigkeit des Betankungsvorgangs den Betankungsvorgang durch eine geeignete Ansteuerung eines Tanksystems der Arbeitsmaschine und / oder der Tankstelle zu unterbrechen und / oder abzubrechen. Weiterhin betrifft die vorliegende Erfindung ein zugehöriges Verfahren.

## Beschreibung

Die vorliegende Erfindung betrifft beine Vorrichtung und Verfahren zur Steuerung eines Betankungsvorgangs einer Arbeitsmaschine mit Wasserstoff.

Für das Betanken von Fahrzeugen und mobilen Maschinen mit großem Energie- und Leistungsbedarf mit Wasserstoff ist es notwendig, die Betankungszeiten möglichst kurz zu halten, weshalb technische Lösungen im Fokus stehen.

Durch eine schnelle Betankung kann der Wasserstoffantrieb einen seiner wichtigsten Trümpfe ausspielen, im Vergleich zu Batterie-elektrischen Fahrzeugen innerhalb weniger Minuten wieder einsatzbereit zu sein, ohne dass die Bauteile in Form von Lebensdauereinbuße leiden.

Herkömmlicherweise erfolgt die Betankung mit Wasserstoff gemäß eines Kennlinienbasierendem Protokolls, welches sich durch einen zeitlich eher großzügig bemessenen Ablauf auszeichnet. Damit kann sichergestellt werden, dass die Behältergrenzen, wie z.B. Drücke und Temperatur eingehalten werden, ohne dass die Wasserstofftankstelle Informationen von einem fahrzeugseitigen Tanksystem benötigt.

Durch das Einhalten von vordefinierten, konservativ gewählten Druckanstiegsrampen kann auf Seiten der Tankstellensteuerung sichergestellt werden, dass von der Tankstelle keine Gefahr für das Tanksystem bzw. das Fahrzeug ausgeht. In anderen Worten erfolgt herkömmlicherweise die Betankung mit Wasserstoff anhand eines in der Tankstellensteuerung implementierten festen Ablaufs.

Eine derartige Vorgehensweise ist geeignet, um bspw. einen PKW mit einer Tankkapazität von 5 kg Wasserstoff in wenigen Minuten zu betanken. Für das Betanken von Arbeitsmaschinen, z.B. von LKW und Baumaschinen, mit Wasserstoffvorraten von 50 kg und mehr sind diese konservativ gewählten Steuerungsabläufe jedoch deutlich zu langsam.

Die vorliegende Erfindung befasst sich mit Arbeitsmaschinen, deren Tankvolumen an Wasserstoff vorzugsweise zwischen 15 kg und 200 kg, insbesondere zwischen 20 kg und 100 kg, besonders bevorzugt zwischen 50 kg und 100 kg beträgt.

Der vorliegenden Erfindung liegt somit die Aufgabe zugrunde, eine sichere und schnelle Möglichkeit zur Betankung einer Arbeitsmaschine mit Wasserstoff zu schaffen.

Die Aufgabe wird durch eine Arbeitsmaschine gemäß Anspruch 1 sowie ein Verfahren gemäß Anspruch 11 gelöst.

Demnach ist eine Arbeitsmaschine vorgesehen, welche dazu ausgelegt ist, mittels einer Tankstelle mit Wasserstoff betankbar zu sein, mit einer Steuerungseinheit, welche dazu ausgelegt ist, einen Betankungsvorgang der Arbeitsmaschine mit Wasserstoff zu überwachen und im Falle einer erfassten Unregelmäßigkeit des Betankungsvorgangs den Betankungsvorgang durch eine geeignete Ansteuerung eines Tanksystems der Arbeitsmaschine und / oder der Tankstelle zu unterbrechen und / oder abzubrechen.

Die Steuereinheit der Arbeitsmaschine steuert den Betankungsvorgang somit vorzugsweise aktiv und dynamisch und kann Steuerungsbefehle an das Tanksystem der Tankstelle ausgeben. In anderen Worten kann die Steuereinheit der Tankstelle als "verlängerter Arm" der Steuereinheit der Arbeitsmaschine angesehen werden.

Um den Betankungsvorgang spürbar beschleunigen zu können, benötigt die Tankstellensteuerung vorzugsweise Messwerte vom Fahrzeugtanksystem wie bspw. Behältertemperaturen und -drücke und berücksichtigt diese zeitsynchron in den Steuerungsabläufen des Füllvorganges.

Vorzugsweise ist somit eine Schnittstelle zur Kommunikation bzw. zum Datenaustausch zwischen der Tankstelle und der Arbeitsmaschine bzw. deren Steuereinheiten vorgesehen.

Die Steuereinheit einer erfindungsgemäßen Arbeitsmaschine kann mit einer Schnittstelle zur wechselseitigen Kommunikation mit der Tankstelle ausgestattet sein, welche dazu ausgelegt ist, Daten hinsichtlich mindestens eines fahrzeugseitigen Parameters des Betankungsvorgangs an die Tankstelle zu übermitteln und / oder Daten hinsichtlich mindestens eines tankstellenseitigen Parameters des Betankungsvorgangs an die Steuereinheit zu übermitteln.

Beispielsweise können Sensordaten des Tanksystems am Fahrzeug z. B. mit der Fahrzeugsteuerung (VCU) erfasst und an die Tankstellensteuerung über eine geeignete Schnittstelle übermittelt werden. Bei dieser Datenschnittstelle kann es sich um eine Verbindung mittels Steckkontakten handeln, über die bspw. über digitale oder analoge Signale oder über CAN-Bus Sensordaten zwischen Fahrzeug und Tankstelle ausgetauscht werden. Beispielsweise kann eine kontaktlose Datenschnittstelle in Form von Infrarot Sende- und Empfangsgeräten sowie Funk Sende- und Empfangsgeräte in Form von Bluetooth- oder NFC-Technologie (Interface) zum Einsatz kommen.

Letztere eignet sich auch zur bidirektionalen Datenübertragung zwischen Fahrzeug- und Tankstellensteuerung und ist weiterhin dafür geeignet, Daten mit hoher Steuerungsgüte übertragen zu können, um diese verlässlich für Steuerungsabläufe auf Fahrzeugseite und Tankstellenseite nutzen zu können.

Durch das Abweichen von den bisher üblichen und festgelegten Betankungsprotokollen, welche entweder basierend auf Druckanstieg, aber auch Mengenanstieg, den Betankvorgang steuern, entstehen auch neue Risiken.

Indem die Sensormessdaten vom Fahrzeugtanksystem maßgeblich in die Steuerungsabläufe des Betankvorgangs eingebunden werden, können beispielsweise die Fehlermöglichkeiten der Steuerung ansteigen, weshalb es gilt, vorzugsweise für den Betankungsvorgang eine Überwachung bzw. Risikobeurteilung durchzuführen.

Die Risikobeurteilung kann beispielsweise von der konservativen Annahme ausgehen, dass ein Versagen der Tankstellensteuerung während des Betankvorgangs eine Tanktemperaturüberschreitung und das Lecken von Behältern zur Folge haben könnte, woraufhin es zum Austritt kritischer Mengen von Wasserstoff und im ungünstigsten Fall zu einem Explosionsereignis mit Personenschaden kommen kann.

Die Steuereinheit kann daher dazu ausgelegt sein, zur Erfassung einer Unregelmäßigkeit des Betankungsvorgangs Daten hinsichtlich mindestens eines fahrzeugseitigen Parameters des Betankungsvorgangs und / oder Daten hinsichtlich mindestens eines tankstellenseitigen Parameters des Betankungsvorgangs mit einem Sollwert und / oder einem Toleranzbereich abzugleichen.

Fahrzeugseitige Parameter können beispielsweise eine Temperatur, ein Druck, eine Flussrate oder eine Menge an Wasserstoff in einem Tank oder einer Leitung der Arbeitsmaschine sein. Auch ein Füllstand in dem Tank kann ein derartiger Parameter sein.

Tankstellenseitige Parameter können beispielsweise eine Temperatur, ein Druck, eine Flussrate oder eine Menge an Wasserstoff in einem Tank oder einer Leitung eines Tanksystems der Tankstelle sein.

Die Steuereinheit einer erfindungsgemäßen Arbeitsmaschine kann dazu ausgelegt sein, zu Erhebung von Daten hinsichtlich mindestens eines fahrzeugseitigen Parameters des Betankungsvorgangs mindestens einen fahrzeugseitigen Sensor kontinuierlich oder zyklisch abzufragen.

Die Steuereinheit kann dazu ausgelegt sein, zu Erhebung von Daten hinsichtlich mindestens eines tankstellenseitigen Parameters des Betankungsvorgangs mindestens einen tankstellenseitigen Sensor kontinuierlich oder zyklisch abzufragen.

Die Steuereinheit kann dazu ausgelegt sein, zum Unterbrechen und / oder Abbrechen des Betankungsvorgangs in einem ersten Schritt ein Tanksystem der Tankstelle dazu anzusteuern, die Lieferung von Wasserstoff zu stoppen, und in einem zweiten Schritt ein Tanksystem der Arbeitsmaschine dazu anzusteuern, die Aufnahme von Wasserstoff zu stoppen.

In anderen Worten wird vorzugsweise eine zweistufige Steuerung zur Unterbrechung des Betankungsvorgangs durch die Steuereinheit der Arbeitsmaschine ausgeführt.

Die Steuereinheit kann dazu ausgelegt sein, in einem ersten Schritt ein Fördersystem, beispielsweise eine Förderpumpe, der Tankstelle energielos zu schalten und / oder eine Förderleitung der Tankstelle abzusperren, und in einem zweiten Schritt eine Aufnahmeleitung der Arbeitsmaschine abzusperren.

Die Steuereinheit kann dazu ausgelegt sein, zum Unterbrechen und / oder Abbrechen des Betankungsvorgangs das Tanksystem der Arbeitsmaschine derart anzusteuern, dass eine Aufnahmeleitung der Arbeitsmaschine mittels zweier vorzugsweise in Serie geschalteter Absperrventile abgesperrt wird.

Die Steuereinheit kann dazu ausgelegt sein, zum Unterbrechen und / oder Abbrechen des Betankungsvorgangs das Tanksystem der Tankstelle derart anzusteuern, dass eine Förderung von Wasserstoff an die Arbeitsmaschine vorzugsweise seitens eines tankstellenseitigen Tanksystems mittels zweier separater Abschaltpfade abgesperrt wird.

Vorzugsweise erfüllt di Steuereinheit die Erfordernisse einer Steuerung der Kategorien 2 oder 3 oder 4 gemäß EN ISO 13894 und / oder EN ISO 19014.

Weiterhin kann die Steuereinheit dazu ausgelegt sein, den Betankungsvorgang so lange zu unterbrechen, bis die Steuereinheit auf der Grundlage von Daten hinsichtlich mindestens eines fahrzeugseitigen Parameters des Betankungsvorgangs und / oder Daten hinsichtlich mindestens eines tankstellenseitigen Parameters des Betankungsvorgangs erfasst, dass eine Fortsetzung des Betankungsvorgangs sicher und / oder störungsfrei möglich ist.

Vorzugsweise erfolgt diese Erfassung durch einen Abgleich der Daten hinsichtlich mindestens eines fahrzeugseitigen Parameters des Betankungsvorgangs und / oder Daten hinsichtlich mindestens eines tankstellenseitigen Parameters des Betankungsvorgangs mit einem Sollwert und / oder einem Toleranzbereich.

Überschreitet beispielsweise ein Druck in einem Tank einen zulässigen Toleranzbereich, so kann der Betankungsvorgang unterbrochen werden, bis der Druck wieder im Toleranzbereich liegt und / oder einem Sollwert entspricht.

Ein weiterer Aspekt der vorliegenden Erfindung betrifft ein Verfahren zur Steuerung eines Betankungsvorgangs einer Arbeitsmaschine mit Wasserstoff, vorzugsweise einer Arbeitsmaschine gemäß der vorliegenden Erfindung, mit den Schritten:
- Überwachen eines Betankungsvorgangs der Arbeitsmaschine mit Wasserstoff, und
- im Falle einer erfassten Unregelmäßigkeit des Betankungsvorgangs Unterbrechen und / oder Abbrechen des Betankungsvorgang durch eine geeignete Ansteuerung eines Tanksystems der Arbeitsmaschine und / oder der Tankstelle mittels einer Steuereinheit der Arbeitsmaschine.

Grundsätzlich können sämtliche vorstehend im Kontext einer erfindungsgemäßen Vorrichtung offenbarten Merkmale oder Funktionen auch im Rahmen eines erfindungsgemäßen Verfahrens eingesetzt werden, lediglich aus Gründen der Vermeidung von Redundanzen werden nicht alle diese Merkmale nachstehend explizit ausgeführt.

Bei einem erfindungsgemäßen Verfahren kann zum Unterbrechen und / oder Abbrechen des Betankungsvorgangs mittels der Steuereinheit der Arbeitsmaschine in einem ersten Schritt ein Tanksystem der Tankstelle dazu angesteuert werden, die Lieferung von Wasserstoff zu stoppen, und in einem zweiten Schritt ein Tanksystem der Arbeitsmaschine dazu angesteuert wird, die Aufnahme von Wasserstoff zu stoppen.

Bei einem erfindungsgemäßen Verfahren kann in dem ersten Schritt ein Fördersystem der Tankstelle mittels der Steuereinheit der Arbeitsmaschine energielos geschaltet werden und / oder eine Förderleitung der Tankstelle abgesperrt werden, und in dem zweiten Schritt kann mittels der Steuereinheit der Arbeitsmaschine eine Aufnahmeleitung der Arbeitsmaschine abgesperrt werden.

Bei einem erfindungsgemäßen Verfahren kann zum Unterbrechen und / oder Abbrechen des Betankungsvorgangs das Tanksystem der Arbeitsmaschine durch die Steuereinheit der Arbeitsmaschine derart angesteuert werden, dass eine Aufnahmeleitung der Arbeitsmaschine mittels zweier vorzugsweise in Serie geschalteter Absperrventile abgesperrt wird.

Bei einem erfindungsgemäßen Verfahren kann zum Unterbrechen und / oder Abbrechen des Betankungsvorgangs das Tanksystem der Tankstelle durch die Steuereinheit der Arbeitsmaschine derart angesteuert werden, dass eine Förderung von Wasserstoff an die Arbeitsmaschine mittels zweier separater Abschaltpfade abgesperrt wird.

In anderen Worten ausgedrückt kann die vorliegende Erfindung wie folgt beschrieben werden:
Im Falle, dass die sichere Fehlerüberwachung des Betankungsvorganges in den Verantwortlichkeitsbereich der Fahrzeugsteuerung verlagert werden kann, verändert sich das Risikoszenario entscheidend, indem aus der Perspektive des Fahrzeuges von einer deutlich geringeren Frequenz bzw. Betankungshäufigkeit ausgegangen werden kann.

Ein Fahrzeug kann als Beispiel einer Arbeitsmaschine verstanden werden.

Ein Fahrzeug wird bspw. nur alle 8 Stunden betankt, oder zumindest seltener als einmal pro Stunde, weshalb man in der Gefährdungsbeurteilung aus der Perspektive des Fahrzeuges von geringer Frequenz (F1) ausgehen würde, sodass man einen Risikograph mit einer Einstufung S2 / F1 / P2 durchschreitet. Es resultiert daraus vorzugsweise eine Anforderung von PL,r = d für eine Sicherheitsfunktion in der Fahrzeugsteuerung, welche im Falle eines kritischen Fehlers diesen sicher erkennen und den Betankungsvorgang sicher abbrechen würde.

Mit der Verlagerung der sicheren Fehlerüberwachung des Betankungsvorganges von der Tankstelle auf das Fahrzeug entsteht eine Aufgabenteilung beider Steuerungen, welche es nun erlaubt, die Anforderung von PL,r = d in Form einer Kategorie 2-Architektur umsetzen zu können.

Bei der Steuerungskategorie 2 erfolgt das Abschalten im Fehlerfall durch eine Ausgabeeinheit im Steuerungskanal der Logik, wobei die Logik durch eine Testeinrichtung (TE) überwacht wird, und im Fehlerfall über den Testkanal eine zweite Abschaltstufe (OTE) aktiviert wird.

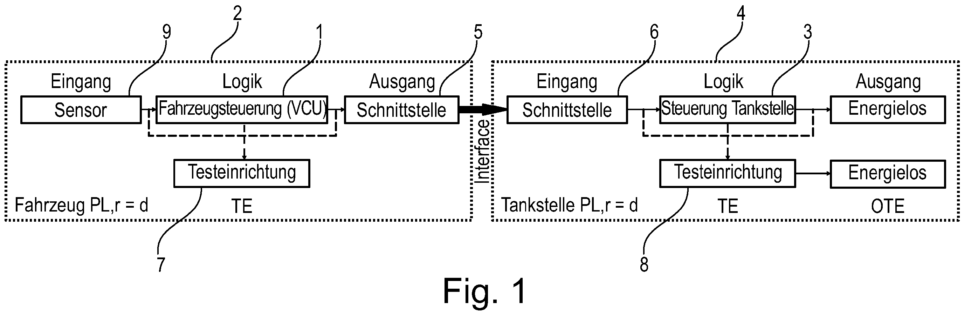

In anderen Worten erfolgt die Abschaltung im Fehlerfall bei der Steuerungskategorie 2 (Beispiele sind die in den Figuren 1 bis 3 gezeigten Steuerungen) ebenso wie bei einer Kategorie 3- oder 4-Architektur vorzugsweise durch zwei Elemente in Form eines Steuerungskanals (Ausgang) und eines Testkanals (OTE als zweite Abschaltstufe).

Mit dem Verlagern der sicheren Fehlerüberwachung des Betankungsvorganges auf die Fahrzeugsteuerung stehen insbesondere folgende Möglichkeiten zur Ausführung des sicheren Abschaltens mit einer Kategorie 2-Architektur zur Auswahl.

Die Fehlerüberwachung erfolgt dabei vorzugsweise vollständig in der Fahrzeugsteuerung (Steuereinheit der Arbeitsmaschine) und berücksichtigt dabei bspw. Tanktemperaturen und/oder- drücke in Form von Grenzwertüberschreitungen oder kritischen Anstiegszeiten.

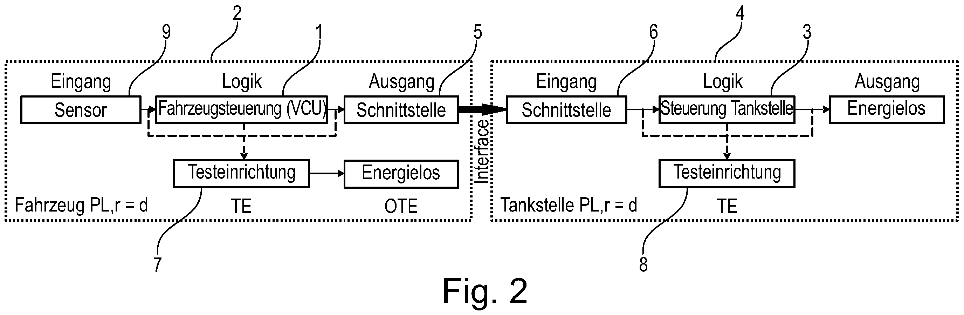

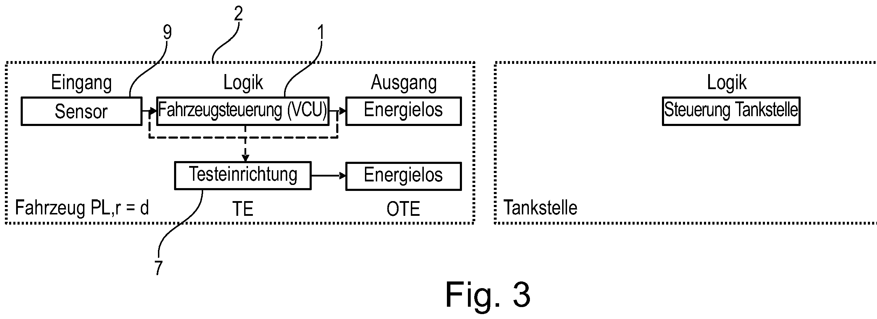

Ein Fehler, der von der Tankstelle bzw. der Tankstellensteuerung ausgeht, kann durch die Steuereinheit der Arbeitsmaschine erkannt werden, welche ein sicheres Abschalten des Betankungsvorgangs bzw. der Wasserstoffzufuhr beispielswiese gemäß einer der folgenden vier Varianten veranlasst:
1. Die Fahrzeugsteuerung übermittelt über eine geeignete Schnittstelle ein Abbruchsignal mit PL d - Güte an die Tankstellensteuerung. Daraufhin unterbricht, wie Figur 1 gezeigt, die Tankstellensteuerung die Wasserstoffzufuhr zum Fahrzeug mit zwei Abschaltpfaden, indem beispielsweise einerseits der Tankstellenantrieb bzw. ein Fördersystem energielos geschaltet wird und / oder andererseits ein Absperrventil in der Füllstrecke bzw. einer Förderleitung geschlossen wird.
2. Die Fahrzeugsteuerung übermittelt über eine geeignete Schnittstelle ein Abbruchsignal mit PL d - Güte an die Tankstellensteuerung. Daraufhin unterbricht, wie in Figur 1 gezeigt, die Tankstellensteuerung die Wasserstoffzufuhr zum Fahrzeug mit zweit Abschaltpfaden, indem zumindest zwei vorzugsweise in Serie geschaltete Absperrventile in der Füllstrecke geschlossen werden.
3. Die Fahrzeugsteuerung übermittelt über eine geeignete Schnittstelle ein Abbruchsignal mit PL d - Güte an die Tankstellensteuerung. Daraufhin unterbricht, wie in Figur 2 gezeigt, die Tankstellensteuerung die Wasserstoffzufuhr zum Fahrzeug, bspw. durch ein energielos Schalten eines Fördersystems der Tankstelle oder durch das Absperren der Füllstrecke bzw. Förderleitung zum Fahrzeug, und / oder die Fahrzeugsteuerung unterbricht die Füllstrecke bzw. Aufnahmeleitung am Fahrzeug beispielsweise mit einem Absperrventil.
4. Die Fahrzeugsteuerung übermittelt kein sicheres Abbruchsignal an die Tankstellensteuerung, sondern unterbricht, wie beispielswiese in Figur 3 gezeigt, im Fehlerfall mit zwei vorzugsweise in Serie geschalteten Absperrventilen die Füllstrecke bzw. Aufnahmeleitung am Fahrzeug.

Die genannten Möglichkeiten 1 bis 3 setzen vorzugsweise voraus, dass sich die Steuerungsanforderung PL,r = d auf der Seite der Tankstelle fortsetzt und die relevanten Teile der Tankstellensteuerung nach der zuständigen Norm mit äquivalenter Steuerungsgüte umgesetzt wird, wobei ein PL d (Performance Level nach EN ISO 13849 / EN ISO 19014) im Anlagenbau einem SIL 2 (Safety Integrity Level nach IEC 61508) entspricht.

Der Einfachheit halber ist die Tankstellensteuerung in den Figuren 1 und 2 als Steuerungskategorie 2 dargestellt, wobei es sich bei der Tankstellensteuerung ebenso um jede alternative Architektur handeln kann, mit der man die Performance Level Anforderung PL,r = d abdecken kann.

Bei Variante 4 übt die Steuerung der Tankstelle keine Funktion beim sicheren Abschalten des Betankungsvorganges aus, weshalb die Steuerung der Tankstelle in Figur 3 nur schematisch angedeutet ist.

Die zu überwachenden Sensoren im Fahrzeugtanksystem werden vorzugsweise durch kontinuierliche Prüfungen oder Einschaltprüfungen durch die Steuereinheit des Fahrzeugs bzw. der Arbeitsmaschine überwacht.

Es kann sich dabei beispielsweise um Behältertemperaturen und/oder Behälterdrücke und andere äquivalente Sensorwerte im Umfeld des Fahrzeugtanksystems handeln, bspw. Drücke in Hochdruck- und Mitteldruckstrecke des Fahrzeugkraftstoffsystems.

Bei den erwähnten Absperrventilen in der Füllstrecke des Fahrzeuges kann es sich jeweils um ein direkt betätigtes Magnetabsperrventil oder ein mit Fremdkraft betätigtes Absperrventil handeln, wobei dessen Diagnosefähigkeit ggf. durch Lagesensorik oder die Überwachung der Drücke vor und nach dem Absperrventil erhöht werden kann.

Über die zuvor erläuterten Vorteile kann ein in der Füllstrecke des Fahrzeuges angeordnetes Absperrventil weiterhin dazu dienen, dass Fahrzeugtanksystem grundsätzlich immer vor Betankung zu schützen, wenn die Voraussetzungen für das Betanken am Fahrzeug bzw. in den Behältern ungünstige sind, womit sich das Fahrzeug auch gegen das Betanken ohne Datenschnittstelle (Non-Communication Betankung) bei ungünstigen Voraussetzungen schützen kann.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden.

Weitere Einzelheiten und Vorteile der Erfindung werden anhand eines in der Zeichnung dargestellten Ausführungsbeispiels näher erläutert.

Es zeigen:
Figur 1: eine erfindungsgemäße Steuerung gemäß einer ersten Ausführungsform,
Figur 2: eine erfindungsgemäße Steuerung gemäß einer zweiten Ausführungsform, und
Figur 3: eine erfindungsgemäße Steuerung gemäß einer dritten Ausführungsform.

Wie in Fig. 1 gezeigt, kommuniziert eine Steuereinheit 1 einer Arbeitsmaschine 2 mit einer Steuereinheit 3 einer Tankstelle 4.

Hierfür weist die Arbeitsmaschine 2 eine Schnittstelle 5 und die Tankstelle 4 eine Schnittstelle 6 auf.

Die Steuereinheit 1 der Arbeitsmaschine 2 wird von einer Testeinrichtung (TE) 7 überwacht. Die Steuereinheit 3 der Tankstelle 4 wird von einer Testeinrichtung (TE) 8 überwacht.

Die Steuereinheit 1 der Arbeitsmaschine 2 erhält von einem Sensor 9 einen fahrzeugseitigen Messwert bezüglich des Betankungsvorgangs, beispielsweise einen Wert eines Drucks in einem Tank.

Die Steuereinheit 1 überprüft auf der Grundlage des Werts des Sensors 9, ob der Betankungsvorgang sicher und / oder ordnungsgemäß abläuft.

Wird eine Unregelmäßigkeit erfasst, beispielsweise, weil der Druckwert außerhalb eines Toleranzbereichs liegt, so gibt die Steuereinheit 1 über die Schnittstellen 5,6 einen Steuerungsbefehl an die Steuereinheit 3 aus.

Die Steuereinheit 3 gibt über einen Steuerkanal (Ausgang) in einem ersten Schritt einen ersten Steuerbefehl zum Abbruch des Betankungsvorgangs aus. Beispielsweise wird eine Wasserstoff-Förderpumpe der Tankstelle abgeschaltet bzw. energielos geschaltet.

Zudem wird über die Testeinrichtung 8 durch einen Testkanal (OTE) in einem zweiten Schritt ein zweiter Steuerbefehl zum Abbruch des Betankungsvorgangs ausgegeben. Beispielsweise wird ein Absperrventil in einer Förderleitung für Wasserstoff energielos geschaltet und somit geschlossen.

Der Betankungsvorgang wird somit zweistufig abgebrochen und / oder unterbrochen. Die Steuerungsbefehle werden hierbei von der Steuereinheit 1 der Arbeitsmaschine 2 ausgegeben, die Ausführung der Steuerbefehle erfolgt auf Seiten der Tankstelle 4.

Bei der in Fig. 2 gezeigten Variante wird ein alternatives Vorgehen bei der Erfassung einer Unregelmäßigkeit gezeigt.

Wird eine Unregelmäßigkeit erfasst so gibt die Steuereinheit 1 über die Schnittstellen 5,6 einen Steuerungsbefehl an die Steuereinheit 3 aus.

Die Steuereinheit 3 gibt über einen Steuerkanal (Ausgang) in einem ersten Schritt einen ersten Steuerbefehl zum Abbruch des Betankungsvorgangs aus. Beispielsweise wird eine Wasserstoff-Förderpumpe der Tankstelle abgeschaltet bzw. energielos geschaltet.

Alternativ oder zusätzlich kann die Steuereinheit 3 über die Testeinrichtung 8 durch einen Testkanal (OTE) in einem zweiten Schritt einen zweiten Steuerbefehl zum Abbruch des Betankungsvorgangs ausgeben. Beispielsweise wird ein Absperrventil in einer Förderleitung für Wasserstoff energielos geschaltet und somit geschlossen.

Im Unterschied zu der Variante aus Fig. 1 ist bei der Ausführungsform gemäß Fig. 2 der Abbruch des Betankungsvorgangs nicht auf Maßnahmen seitens der Tankstelle begrenzt.

So gibt die Steuereinheit 1 über die Testeinrichtung 7 durch einen Testkanal (OTE) in einem weiteren Schritt einen weiteren Steuerbefehl zum Abbruch des Betankungsvorgangs auf Seiten der Arbeitsmaschine aus. Beispielsweise wird ein Absperrventil in einer Aufnahmeleitung für Wasserstoff der Arbeitsmaschine 2 energielos geschaltet und somit geschlossen.

Die Arbeitsmaschine 2 und die Tankstelle 4 werden somit fluidisch getrennt.

Bei der in Fig. 3 gezeigten Variante erfolgt keine Kommunikation zwischen den Steuereinheiten 1 und 3. Vielmehr bricht die Steuereinheit 1 den Betankungsvorgang fahrzeugseitig bzw. auf Seiten der Arbeitsmaschine 2 ab.

Die Steuereinheit kann hierbei einen oder mehrere Steuerbefehle über einen Steuerkanal und oder einen Testkanal (OTE) über die Testeinrichtung 7 ausgeben. Beispielsweise wird ein Absperrventil in einer Aufnahmeleitung für Wasserstoff der Arbeitsmaschine 2 energielos geschaltet und somit geschlossen und / oder es wird ein fahrzeugseitiges Fördersystem für Wasserstoff, beispielsweise eine Pumpe, energielos geschaltet.

## Patentansprüche

1. Arbeitsmaschine, welche dazu ausgelegt ist, mittels einer Tankstelle mit Wasserstoff betankbar zu sein, mit einer Steuerungseinheit, welche dazu ausgelegt ist, einen Betankungsvorgang der Arbeitsmaschine mit Wasserstoff zu überwachen und im Falle einer erfassten Unregelmäßigkeit des Betankungsvorgangs den Betankungsvorgang durch eine geeignete Ansteuerung eines Tanksystems entweder der Arbeitsmaschine oder der Tankstelle zu unterbrechen und / oder abzubrechen, wobei die Steuerungseinheit ausgeführt ist, eine zweistufige Unterbrechung oder einen zweitstufen Abbruch des Betankungsvorgangs auszuführen.

2. Arbeitsmaschine nach Anspruch 1, **dadurch gekennzeichnet, dass** die Steuerungseinheit dazu ausgelegt ist, die zweistufige Unterbrechung oder den zweistufigen Abbruch mittels eines Steuerungskanals und mittels eines Testkanals auszuführen.

3. Arbeitsmaschine gemäß Anspruch 1 oder 2, **dadurch gekennzeichnet, dass** die Steuereinheit mit einer Schnittstelle zur wechselseitigen Kommunikation mit der Tankstelle ausgestattet ist, welche dazu ausgelegt ist, Daten hinsichtlich mindestens eines fahrzeugseitigen Parameters des Betankungsvorgangs an die Tankstelle zu übermitteln und / oder Daten hinsichtlich mindestens eines tankstellenseitigen Parameters des Betankungsvorgangs an die Steuereinheit zu übermitteln.

4. Arbeitsmaschine gemäß einem der vorhergehenden Ansprüche , **dadurch gekennzeichnet, dass** die Steuereinheit dazu ausgelegt ist, zur Erfassung einer Unregelmäßigkeit des Betankungsvorgangs Daten hinsichtlich mindestens eines fahrzeugseitigen Parameters des Betankungsvorgangs und / oder Daten hinsichtlich mindestens eines tankstellenseitigen Parameters des Betankungsvorgangs mit einem Sollwert und / oder einem Toleranzbereich abzugleichen.

5. Arbeitsmaschine gemäß einem der vorhergehenden Ansprüche, **dadurch gekennzeichnet, dass** die Steuereinheit dazu ausgelegt ist, zur Erhebung von Daten hinsichtlich mindestens eines fahrzeugseitigen Parameters des Betankungsvorgangs mindestens einen fahrzeugseitigen Sensor kontinuierlich oder zyklisch abzufragen.

6. Arbeitsmaschine gemäß einem der vorhergehenden Ansprüche, **dadurch gekennzeichnet, dass** die Steuereinheit dazu ausgelegt ist, zum Unterbrechen und / oder Abbrechen des Betankungsvorgangs das Tanksystem der Arbeitsmaschine derart anzusteuern, dass eine Aufnahmeleitung der Arbeitsmaschine mittels zweier in Serie geschalteter Absperrventile abgesperrt wird.

7. Arbeitsmaschine gemäß einem der vorhergehenden Ansprüche, **dadurch gekennzeichnet, dass** die Steuereinheit dazu ausgelegt ist, zum Unterbrechen und / oder Abbrechen des Betankungsvorgangs das Tanksystem der Tankstelle derart anzusteuern, dass eine Förderung von Wasserstoff an die Arbeitsmaschine mittels zweier separater Abschaltpfade abgesperrt wird.

8. Arbeitsmaschine gemäß einem der vorhergehenden Ansprüche, **dadurch gekennzeichnet, dass** die Steuereinheit die Erfordernisse einer Steuerung der Kategorien 2 oder 3 oder 4 gemäß EN ISO 13894 und / oder EN ISO 19014 erfüllt.

9. Arbeitsmaschine gemäß einem der vorhergehenden Ansprüche, **dadurch gekennzeichnet, dass** die Steuereinheit dazu ausgelegt ist, den Betankungsvorgang so lange zu unterbrechen, bis die Steuereinheit auf der Grundlage von Daten hinsichtlich mindestens eines fahrzeugseitigen Parameters des Betankungsvorgangs und / oder Daten hinsichtlich mindestens eines tankstellenseitigen Parameters des Betankungsvorgangs erfasst, dass eine Fortsetzung des Betankungsvorgangs sicher möglich ist, vorzugsweise durch einen Abgleich der Daten hinsichtlich mindestens eines fahrzeugseitigen Parameters des Betankungsvorgangs und / oder Daten hinsichtlich mindestens eines tankstellenseitigen Parameters des Betankungsvorgangs mit einem Sollwert und / oder einem Toleranzbereich.

10. Verfahren zur Steuerung eines Betankungsvorgangs einer Arbeitsmaschine gemäß einem der Ansprüche 1 bis 9 mit Wasserstoff, mit den Schritten:
Überwachen eines Betankungsvorgangs der Arbeitsmaschine mit Wasserstoff, und
im Falle einer erfassten Unregelmäßigkeit des Betankungsvorgangs Unterbrechen und / oder Abbrechen des Betankungsvorgangs durch eine geeignete Ansteuerung eines Tanksystems entweder der Arbeitsmaschine oder der Tankstelle mittels einer Steuereinheit der Arbeitsmaschine.

11. Verfahren gemäß Anspruch 10, **dadurch gekennzeichnet, dass** zum Unterbrechen und / oder Abbrechen des Betankungsvorgangs das Tanksystem der Arbeitsmaschine durch die Steuereinheit der Arbeitsmaschine derart angesteuert wird, dass eine Aufnahmeleitung der Arbeitsmaschine mittels zweier in Serie geschalteter Absperrventile abgesperrt wird.

12. Verfahren gemäß einem der vorhergehenden Ansprüche 10 oder 11, **dadurch gekennzeichnet, dass** zum Unterbrechen und / oder Abbrechen des Betankungsvorgangs das Tanksystem der Tankstelle durch die Steuereinheit der Arbeitsmaschine derart angesteuert wird, dass eine Förderung von Wasserstoff an die Arbeitsmaschine mittels zweier separater Abschaltpfade abgesperrt wird.
